# EUROPEAN PATENT SPECIFICATION

(11) **EP 2 112 029 B1**
(45) Date of publication and mention of the grant of the patent: **17.04.2013**
(21) Application number: 09005599.7
(22) Date of filing: 21.04.2009
(51) Int. Cl.: B60R 21/0132

(54) **Occupant protection control device and occupant protection system**
Insassenschutzsteuervorrichtung und Insassenschutzsystem
Dispositif de contrôle de protection d'occupant et système de protection d'occupant

(30) Priority: 23.04.2008 JP 2008112706
(43) Date of publication of application: 28.10.2009
(73) Proprietor: Keihin Corporation, Shinjuku-ku, Tokyo (JP)
(72) Inventor: Hayasaka, Masatoshi, Shioya-gun Tochigi-ken (JP)
(74) Representative: Eisenführ, Speiser & Partner

(56) References cited:
- EP-A1- 1 571 053
- EP-A1- 1 640 219
- JP-A- 2006 056 441
- US-A1- 2003 155 754
- US-A1- 2007 055 429

## Description

### BACKGROUND OF THE INVENTION

Priority is claimed on Japanese Patent Application No. 2008-112706, filed April 23, 2008, the contents of which are incorporated herein by reference.

### Field of the Invention

The present invention relates to an occupant protection control device and an occupant protection system.

### Description of the Related Art

As an example of an SRS (Supplemental Restraint System) air bag system for protecting occupants when a vehicle collides, a system is known in which an inflater output is controlled based on an AND operation of: safing determination result based on an acceleration signal output from a front crash sensor (referred to hereunder as FCS) provided at the front of a vehicle; and a collision determination result based on an acceleration signal output from a main sensor (refer to Japanese Unexamined Patent Application, First Publication No. 2006-56441).

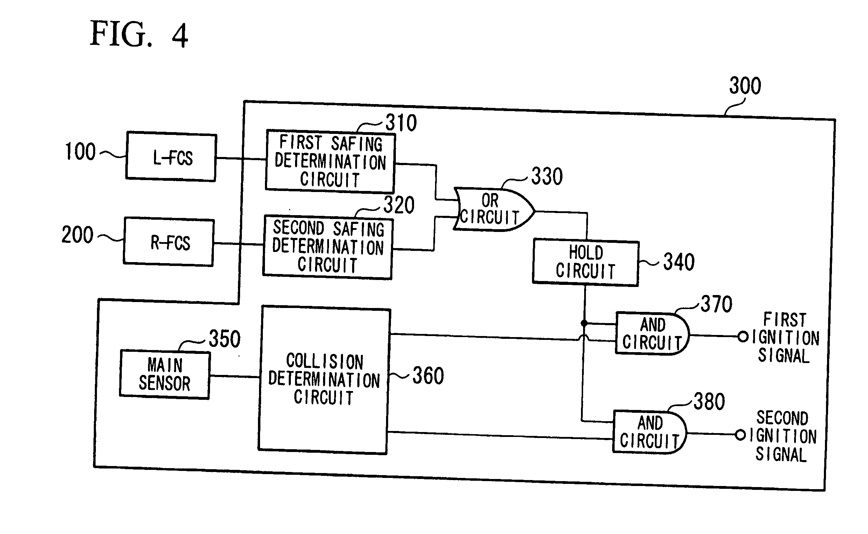

A control unit which performs the above safing determination, collision determination, AND operation, and air bag deployment control, is referred to an SRS unit. It is typical that the SRS unit is provided independently from an ECU (Electronic Control Unit) which controls the engine and the like. Furthermore, in most cases, the main sensor is provided inside of the SRS unit. FIG. 4 shows a configuration example of a system that performs multi-stage (here, two stage) deployment control of an air bag in the SRS air bag system as described above. Here, multi-stage deployment control of an air bag is control, when generating gas by an inflater to deploy an air bag, for generating gas in stages by igniting a plurality of squibs sequentially, rather than generating gas all at once at maximum output.

As shown in FIG. 4, a conventional SRS air bag system includes an L-FCS 100 installed on the left side at the front of a vehicle, an R-FCS 200 installed on the right side at the front of the vehicle, an SRS unit 300, and an air bag (not shown in the figure) serving as an occupant protection device. The SRS unit 300 is provided with a first safing determination circuit 310, a second safing determination circuit 320, an OR circuit 330, a hold circuit 340, a main sensor 350, a collision determination circuit 360, a first AND circuit 370, and a second AND circuit 380.

The first safing determination circuit 310 performs safing determination based on an acceleration signal output from the L-FCS 100. The first safing determination circuit 310 outputs a safing signal indicating whether or not there is a collision, to the OR circuit 330, dependent on the determination result. Here, the safing signal becomes a high level signal in the case where there is a collision. The second safing determination circuit 320 performs safing determination similar to the first safing determination circuit 310 based on an acceleration signal output from the R-FCS 200. The second safing determination circuit 320 outputs a safing signal indicating whether or not there is a collision, to the OR circuit 330, dependent on the determination result.

The OR circuit 330 outputs a signal obtained by an OR operation of the safing signal input from the first safing determination circuit 310 and the safing signal input from the second safing determination circuit 320, to the hold circuit 340. The hold circuit 340 has a function of holding the state of the output signal of the OR circuit 330. In particular, in the case where the output signal of the OR circuit 330 becomes a high level (there is a collision), the hold circuit 340 outputs a signal that is held at a high level state for a predetermined time (for example, 100ms), to the first AND circuit 370 and the second AND circuit 380. On the other hand, if the output signal of the OR circuit 330 is at a low level (no collision), the hold circuit 340 outputs a signal held at a low level state, to the first AND circuit 370 and the second AND circuit 380.

The main sensor 350 outputs an acceleration signal, dependent on the acceleration acting in the backwards and forwards direction or the horizontal direction of the vehicle, to the collision determination circuit 360. The collision determination circuit 360 calculates a velocity variation V by a primary interval integral of the acceleration signal input from the main sensor 350, and also calculates a shift amount S by a secondary interval integral. Moreover, the collision determination circuit 360 performs collision determination corresponding to each of the stages, based on the calculated values of the velocity variation V and the shift amount S. Dependent on the determination result, the collision determination circuit 360 outputs a first collision determination signal corresponding to the first stage, to the first AND circuit 370, and outputs a second collision determination signal corresponding to the second stage, to the second AND circuit 380. These first and second collision determination signals become high levels in the case where the collision determination corresponding to each of the levels determines that there is a collision.

The first AND circuit 370 performs an AND operation of the output signal of the hold circuit 340 and the first collision determination signal of the collision determination circuit 360, and outputs the operation result as a first ignition signal for igniting a first stage deployment squib provided in the inflater of the air bag. That is, the first ignition signal is a signal indicating whether or not the air bag corresponding to a first stage is to be controlled to deploy. The first ignition signal becomes a high level signal indicating that the air bag corresponding to a first stage is to be controlled to deploy in the case where the output signal of the hold circuit 340 and the first collision determination signal are both at high levels.

The second AND circuit 380 performs an AND operation of the output signal from the hold circuit 340 and the second collision determination signal from the collision determination circuit 360, and outputs the operation result as a second ignition signal for igniting a second stage deployment squib provided in the inflater of the air bag. That is, the second ignition signal is a signal indicating whether or not the air bag corresponding to a second stage is to be controlled to deploy. The second ignition signal becomes a high level signal indicating that the air bag corresponding to a first stage is to be controlled to deploy in the case where the output signal of the hold circuit 340 and the second collision determination signal are both at high levels.

In addition, in FIG. 4, though not shown in the figure, the SRS unit 300 is provided with a first ignition circuit which generates an electric current for igniting the first stage deployment squib in the case where a high level first ignition signal is input to the first ignition circuit. Furthermore, the SRS unit 300 is provided with a second ignition circuit which generates an electric current for igniting the second stage deployment squib in the case where a high level second ignition signal is input to the second ignition circuit.

In this manner, in a conventional SRS air bag system, a first ignition signal for first stage air bag deployment is generated based on an AND operation of: an OR operation result, which is held for a predetermined time, of safing determination results based on two acceleration signals of the L-FCS 100 and the R-FCS 200; and a first stage collision determination result determined by the collision determination circuit 360 based on an acceleration signal of the main sensor 350. Furthermore, a second ignition signal for second stage air bag deployment is generated based on an AND operation of: an OR operation result of the safing determination results, which is held for a predetermined time; and a second stage collision determination result.

As described above, in the conventional SRS air bag system, a time difference occurs between; the time that the OR operation result on the safing determination results based on two acceleration signals of the L-FCS 100 and the R-FCS 200 is input to the first AND circuit 370 and the second AND circuit 380, and the time that the first and second collision determination signals are input to the first AND circuit 370 and the second AND circuit 380 from the collision determination circuit 360. Therefore, the hold circuit 340 is provided at the stage subsequent to the OR circuit 330 so that an ignition signal at a high level based on the AND operation is reliably output.

That is, the hold time in the hold circuit 340 is set to be longer than at least the time required from; when the output signal (safing determination result) of the OR circuit 330 becomes a high level indicating that there is a collision, to when the collision determination result corresponding to the first stage becomes to a result indicating that there is a collision in the collision determination circuit 360 (to when the first collision determination signal switches to a high level).

However, in the case where a great time difference (longer time difference than the hold time in the hold circuit 340) occurs in the output timing between the first collision determination signal and the second collision determination signal output from the collision determination circuit 360, then when the second collision determination signal at a high level is output to the second AND circuit 380, the output signal of the hold circuit 340 switches to a low level. Therefore the second ignition signal for the second stage air bag deployment becomes a low level. As a result, there is concern that the second stage air bag deployment cannot be executed.

The present invention takes the above circumstances into consideration and has an object of providing an occupant protection control device and an occupant protection system that can execute reliable deployment of second and subsequent stages of the occupant protection device when the occupant protection device is deployed in multiple stages when a vehicle collides.

### SUMMARY OF THE INVENTION

According to the present invention this object is accomplished by an occupant protection control device as well as by an occupant protection system as set out in the appended claims.

That is, the present invention employs an occupant protection control device which controls multiple-stage deployment of a plurality of occupant protection devices when a vehicle collides, the occupant protection control device including: a collision determination device which performs collision determination corresponding to each stage based on an output signal from a first acceleration detection device for detecting an acceleration acting on the vehicle; a safing determination device which performs safing determination based on an output signal from a second acceleration detection device for detecting an acceleration acting on the vehicle; a safing determination hold device which holds a safing determination result obtained by the safing determination device; and a deployment command device which controls deployment of the occupant protection devices based on a collision determination result obtained by the collision determination device and a safing determination result held by the safing hold device, wherein the safing determination hold device holds the safing determination result for longer than at least from when the safing determination result becomes a result indicating that there is a collision to when a result of a collision determination corresponding to a first stage obtained by the collision determination device becomes a result indicating that there is a collision, and the deployment command device, in the case where both the collision determination result corresponding to the first stage obtained by the collision determination device, and the safing determination result held by the safing determination hold device indicate that there is a collision, controls the occupant protection device corresponding to the first stage to deploy, and in the case where a collision determination result corresponding to a second or subsequent stage obtained by the collision determination device indicates that there is a collision, and that the occupant protection device corresponding to a stage prior to the second or subsequent stage has been controlled to deploy, controls the occupant protection device corresponding to the second or subsequent to deploy.

Furthermore, it may be arranged such that deployment of two of the occupant protection devices is controlled in two stages, and the deployment command device is provided with: a first AND operation device which performs an AND operation of a collision determination result corresponding to a first stage obtained by the collision determination device and a safing determination result held by the safing determination hold device, and controls the occupant protection device corresponding to the first stage to deploy in the case where both the collision determination result and the safing determination result indicate that there is a collision; a deployment command holding device, which holds a result whether or not the occupant protection device corresponding to the first stage is to be controlled to deploy, and in the case where the occupant protection device corresponding to the first stage has been controlled to deploy, holds the result indefinitely; and a second AND operation device which performs an AND operation of the collision determination result corresponding to a second stage in the collision determination device and the result held by the deployment command holding device, and in the case where the collision determination result corresponding to the second stage indicates that there is a collision, and that the result held by the deployment command holding device indicates that the occupant protection device corresponding to the first stage has been controlled to deploy, controls a second stage of the occupant protection device to deploy.

Moreover, the present invention employs an occupant protection system, including: the above-described occupant protection control device; the first acceleration detection device; the second acceleration detection device installed in a different location from the first acceleration detection device; and the plurality of occupant protection devices installed in order to protect an occupant of the vehicle when a collision occurs.

According to the present invention, given a condition where both the collision determination result corresponding to the first stage obtained by the collision determination device, and the safing determination result held in the safing determination holding device are results indicating that there is a collision, the occupant protection device corresponding to the first stage is controlled to deploy. Furthermore, regarding the second or subsequent stages, given a condition where the collision determination result corresponding to the present stage of the collision determination device is a result indicating that there is a collision, and the occupant protection device corresponding to the stage prior to the present stage has been controlled to deploy, the present stage of the occupant protection device is controlled to deploy. As a result, it is possible to deploy the second and subsequent stages of the occupant protection device reliably.

### BRIEF DESCRIPTION OF THE DRAWINGS

FIG. 1 is a schematic block diagram of an occupant protection system having an occupant protection control device (SRS unit 40) according to an embodiment of the present invention.
FIG. 2 is a detailed explanatory diagram of the SRS unit 40 according to the embodiment.
FIG. 3 is a flow chart showing the operation of the SRS unit 40 according to the embodiment.
FIG. 4 is a schematic block diagram of an occupant protection system according to a conventional technique.

### DETAILED DESCRIPTION OF THE INVENTION

Hereunder is a description of an embodiment of the present invention, with reference to the drawings.

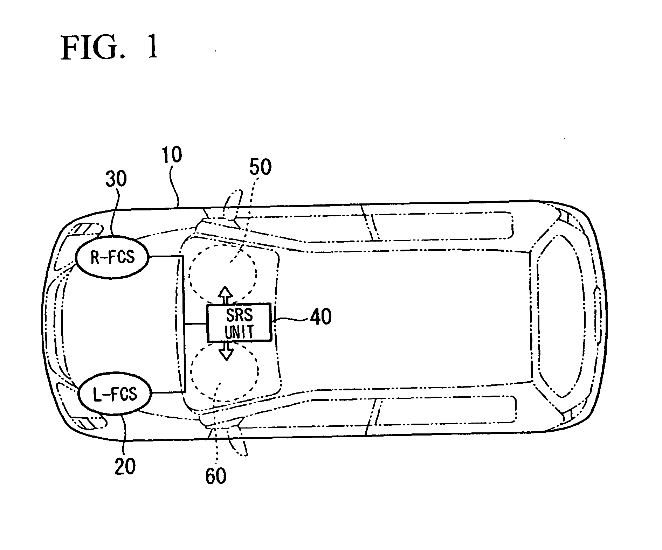

FIG. 1 is a schematic block diagram of an occupant protection system having an occupant protection control device according to the embodiment of the present invention. Hereunder is a description of an SRS air bag system that performs deployment control of the occupant protection device in multiple stages (here, two stages) when a vehicle collides, as an example of an occupant protection system according to the present embodiment.

As shown in FIG. 1, the occupant protection system according to the present embodiment is provided with a front crash sensor (referred to hereunder as L-FCS) 20 installed on the left side at the front of a vehicle 10, a front crash sensor (referred to hereunder as R-FCS) 30 installed on the right side at the front of the vehicle 10, an SRS unit (occupant protection device) 40 installed inside of the vehicle 10, a driver's seat air bag 50 installed on the driver's seat side, and a front passenger's seat air bag 60 installed on the front passenger's seat side.

The L-FCS 20 and the R-FCS 30 (second acceleration detection devices) are satellite sensors connected to the SRS unit 40 via a bus. Each of the L-FCS 20 and the R-FCS 30 (second acceleration detection devices) is constructed as a unit including a sensor body for detecting impact due to a collision, such as an acceleration sensor, and a control circuit for performing data communication with the SRS unit 40. The L-FCS 20 and the R-FCS 30 detect the acceleration generated mainly from a front impact collision with the acceleration sensors. Furthermore, the control circuit converts the output signals from the acceleration sensors into acceleration data, which is digital data, and the converted signals are transmitted to the SRS unit 40.

The SRS unit 40 performs multi-stage deployment control of the occupant protection devices, that is, the driver's seat air bag 50 and the front passenger's seat air bag 60, when a collision occurs, based on the acceleration data received from the L-FCS 20 and the R-FCS 30, and acceleration data obtained from a main sensor 45 installed internally, which is described later.

The driver's seat air bag 50 and the front passenger's seat air bag 60 are air bags provided as occupant protection devices. The driver's seat air bag 50 and the front passenger's seat air bag 60 deploy under the control of the SRS unit 40 when a collision occurs, and protect the passengers from the impact of the collision. A plurality (here two because of the two stages) of squibs for igniting in stages to generate gas is provided inside the inflaters of the driver's seat air bag 50 and front passenger's seat air bag 60. Furthermore, hereunder, for convenience of description, the driver's seat air bag 50 and the front passenger's seat air bag 60 are both described by the general term air bag.

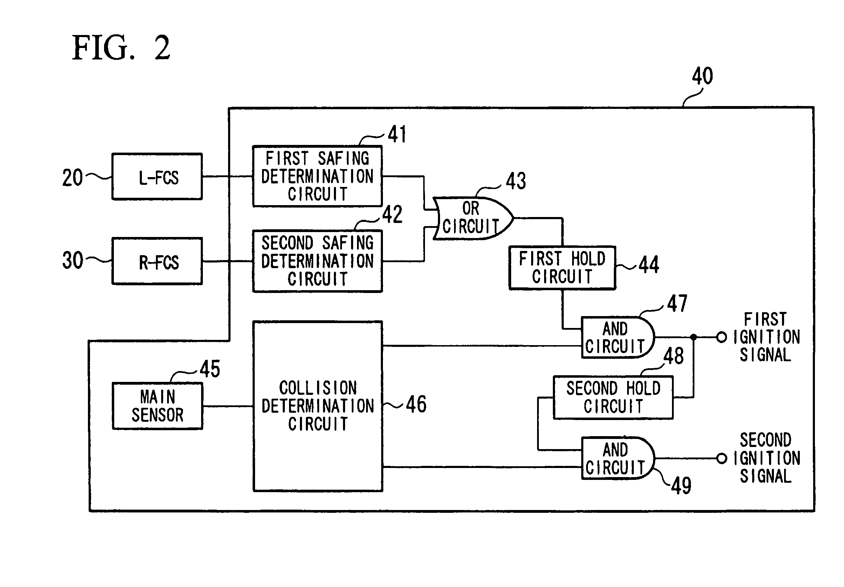

Next is a detailed description of the structure of the inside of the SRS unit 40, with reference to FIG. 2. As shown in FIG. 2, the SRS unit 40 is provided with a first safing determination circuit (safing determination device) 41, a second safing determination circuit (safing determination device) 42, an OR circuit 43, a first hold circuit (safing determination holding device) 44, a main sensor (first acceleration detection device) 45, a collision determination circuit (collision determination device) 46, a first AND circuit 47, a second hold circuit 48, and a second AND circuit 49.

The first AND circuit 47, the second hold circuit 48, and the second AND circuit 49, constitute a deployment command device in the present invention. The first AND circuit 47 corresponds to a first AND operation device corresponding to a first stage, the second AND circuit 49 corresponds to a second AND operation device corresponding to a second stage, and the second hold circuit 48 corresponds to a deployment command holding device.

The first safing determination circuit 41 performs safing determination based on the acceleration data received from the L-FCS 20. The first safing determination circuit 41 outputs a safing signal indicating whether or not there is a collision, dependent on the determination result, to the OR circuit 43. To be specific, the first safing determination circuit 41 compares the integrated value (velocity variation), obtained by a primary interval integral of the acceleration data, and a predetermined threshold value, and in the case where the velocity variation exceeds the threshold value, outputs a high level safing signal indicating that there is a collision. The second safing determination circuit 42 performs safing determination similar to the first safing determination circuit 41 based on the acceleration data received from the R-FCS 30. The second safing determination circuit 42 outputs a safing signal indicating whether or not there is a collision, dependent on the determination result, to the OR circuit 43.

The OR circuit 43 outputs a signal obtained by an OR operation of the safing signal input from the first safing determination circuit 41 and the safing signal input from the second safing determination circuit 42, to the first hold circuit 44. The first hold circuit 44 has a function of holding the state of the output signal of the OR circuit 43. In particular, in the case where the state of the output signal of the OR circuit 43 is switched to a high level (state indicating there is a collision), the first hold circuit 44 outputs a signal that is held at a high level state for a predetermined time (for example, 100ms), to the first AND circuit 47. On the other hand, if the state of the output signal of the OR circuit 43 is at a low level (state indicating there is no collision), the first hold circuit 44 outputs a signal held at a low level state, to the first AND circuit 47. The hold time (100ms) in the first hold circuit 44 is set to be longer than at least the time required from; when the output signal (safing determination result) of the OR circuit 43 switches to a high level indicating that there is a collision, to when the collision determination result corresponding to the first stage switches to a result indicating that there is a collision in the collision determination circuit 46 (to when the first collision determination signal switches to a high level).

The main sensor 45 outputs an acceleration signal, dependent on the acceleration acting in the backwards and forwards direction or the horizontal direction of the vehicle, to the collision determination circuit 46. The collision determination circuit 46 converts the acceleration signal input from the main sensor 45 into digital, calculates a velocity variation V by a primary interval integral of the acceleration data after the digital conversion, and also calculates a shift amount S by a secondary interval integral. Moreover, the collision determination circuit 46 performs collision determination corresponding to each of the stages, based on the calculated values of the velocity variation V and the shift amount S. Dependent on the determination result, the collision determination circuit 46 outputs a first collision determination signal corresponding to the first stage, to the first AND circuit 47, and outputs a second collision determination signal corresponding to the second stage, to the second AND circuit 49.

To be specific, the collision determination circuit 46 is a two-dimensional map including a first axis for the shift amount S and a second axis for the velocity variation V, and stores an S-V map in which a first collision determination threshold value for allowing a first stage air bag deployment (start) and a second collision determination threshold value for allowing a second stage air bag deployment are set in advance. In the S-V map, in the case where the calculated values of the velocity variation V and the shift amount S are in a region exceeding the first collision determination threshold value, the collision determination circuit 46 determines that there is a collision corresponding to the first stage, and outputs a first collision determination signal at a high level to the first AND circuit 47. Furthermore, in the S-V map, in the case where the calculated values of the velocity variation V and the shift amount S are in a region exceeding the second collision determination threshold value, the collision determination circuit 46 determines that there is a collision corresponding to the second stage, and outputs a second collision determination signal at a high level to the second AND circuit 49. For details of such a collision determination method, refer for example to Japanese Unexamined Patent Application, First Publication No. 2006-88914.

The first AND circuit 47 performs an AND operation of the output signal from the first hold circuit 44 (that is, a safing result held by the first hold circuit 44) and the first collision determination signal output from the collision determination circuit 46 (that is, the collision determination result corresponding to the first stage), and outputs the operation result as a first ignition signal for igniting a first stage deployment squib provided in the inflater of the air bag. That is, the first ignition signal is a signal indicating whether or not the air bag corresponding to a first stage is to be controlled to deploy. In the case where the output signal of the first hold circuit 44 and the first collision determination signal are both at high levels, the first ignition signal becomes a high level signal indicating that the air bag corresponding to a first stage is to be controlled to deploy.

The second hold circuit 48 has a function of holding the first ignition signal output from the first AND circuit 47 (that is, the result indicating whether or not the air bag corresponding to the first stage is to be controlled to deploy). In the case where the first ignition signal becomes a state indicating that the air bag corresponding to a first stage is to be controlled to deploy (that is, a high level), the second hold circuit 48 outputs a signal held at a high level state, indicating that the air bag corresponding to a first stage is controlled to deploy, indefinitely. In the case where the ignition switch is off, the abovementioned indefinite hold is cancelled.

The second AND circuit 49 performs an AND operation of the output signal from the second hold circuit 48 (that is, the result indicating whether or not the air bag corresponding to the first stage is to be controlled to deploy,, which is held by the second hold circuit 48) and the second collision determination signal output from the collision determination circuit 46 (that is, the collision determination result corresponding to the second stage), and outputs the operation result as a second ignition signal for igniting a second stage deployment squib provided in the inflater of the air bag. That is, the second ignition signal is a signal indicating whether or not the air bag corresponding to a second stage is to be controlled to deploy. In the case where the output signal of the second hold circuit 48 and the second collision determination signal are both at high levels, the second ignition signal becomes a high level signal indicating that the air bag corresponding to a first stage is to be controlled to deploy.

The SRS unit 40 is provided with a first ignition circuit, which is omitted in FIG. 2, for generating an electric current for igniting the first stage deployment squib in the case where a first ignition signal at a high level is input. Furthermore, the SRS unit 40 is provided with a second ignition circuit for generating an electric current for igniting the second stage deployment squib.

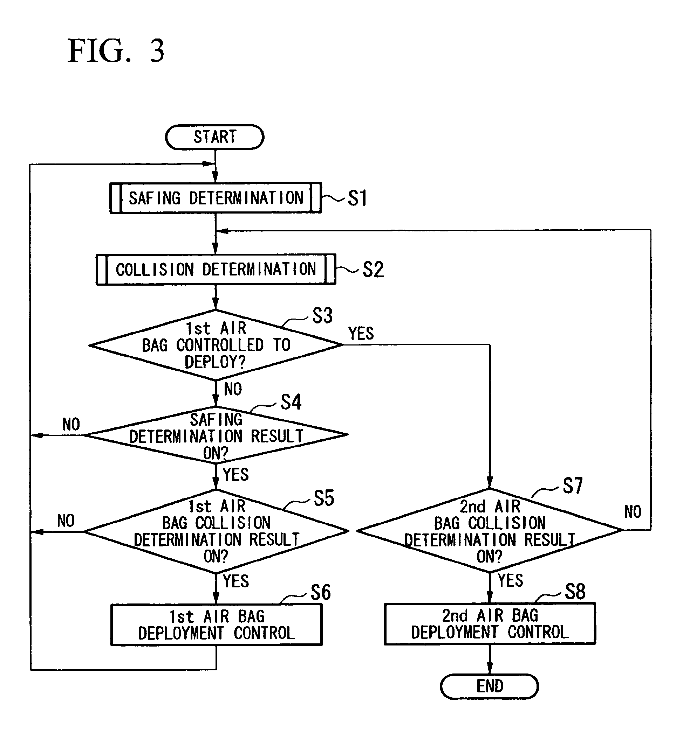

Next is a description of the operation of an occupant protection system (in particular, the SRS unit 40) according to the present embodiment constructed as above, with reference to the flow chart of FIG. 3.

As shown in FIG. 3, the SRS unit 40 firstly performs safing determination based on the acceleration data received from the L-FCS 20 and the R-FCS 30 (step S1). That is, safing determination is performed by the first safing determination circuit 41 and the second safing determination circuit 42, and a safing signal corresponding to the determination result is output to the OR circuit 43.

Moreover, the SRS unit 40 performs collision determination based on the acceleration signal output from the main sensor 45 installed thereinside (step S2). That is, the velocity variation V and the shift amount S are calculated by the collision determination circuit 46, and the first collision determination signal and the second collision determination signal are output according to the region in the S-V map where the calculated values of the concerned velocity variation V and shift amount S are located.

The SRS unit 40 determines whether or not the air bag corresponding to the first stage has been controlled to deploy (step S3). In the case where the air bag corresponding to the first stage has not been controlled to deploy, that is, the case where the output signal of the second hold circuit 48 is at a low level ("No"), it is determined whether or not the safing determination result is ON (whether the output signal of the first hold circuit 44 is at a high level) (step S4). In step S4, in the case where the safing determination result is ON ("Yes"), the SRS unit 40 determines whether or not the collision determination result corresponding to the first stage is ON (whether the first collision determination signal is at a high level) (step S5).

In step S5, in the case where the collision determination result corresponding to the first stage is ON ("Yes"), the SRS unit 40 controls the air bag corresponding to the first stage to deploy. That is, in the case where the output signal of the first hold circuit 44 and the first collision determination signal are both at high levels, a first ignition signal at a high level is output from the first AND circuit 47, and the air bag corresponding to the first stage is controlled to deploy. At this time, the output signal of the second hold circuit 48 is held at a high level.

After step S6 is complete, in the case of "No" in step S4, and in the case of "No" in step S5, the SRS unit 40 returns to step 1. That is, in the case where at least either one of the output signal of the first hold circuit 44 and the first collision determination signal is at a low level, a first ignition signal at a low level is output from the first AND circuit 47, so the air bag corresponding to the first stage is not controlled to deploy.

On the other hand, in step S3, in the case where it is determined that the air bag corresponding to the first stage has been controlled to deploy, that is, in the case where the output signal of the second hold circuit 48 is at a high level ("Yes"), the SRS unit 40 determines whether or not the collision determination result corresponding to the second stage is ON (whether the second collision determination signal is at a high level) (step S7). In step S7, in the case where the collision determination result corresponding to the second stage is ON ("Yes"), the SRS unit 40 controls the air bag corresponding to the second stage to deploy (step S8). That is, in the case where the output signal of the second hold circuit 48 and the second collision determination signal are both at high levels, a second ignition signal at a high level is output from the second AND circuit 49, and the air bag corresponding to the second stage is controlled to deploy. In step S7, in the case where the collision determination result corresponding to the second stage is OFF ("No"), the SRS unit 40 returns to step S2.

As described above, in the occupant protection system according to the present embodiment, given a condition where both the collision determination result corresponding to the first stage in the collision determination circuit 46, and the safing determination result held in the first hold circuit 44, are results indicating that there is a collision, the air bag corresponding to the first stage is controlled to deploy. Furthermore, given a condition where the collision determination result according to the second stage in the collision determination circuit 46 is a result indicating that there is a collision, and the air bag corresponding to the first stage has been controlled to deploy, the air bag corresponding to the second stage is controlled to deploy.

Accordingly, even if there is a great time difference (time difference greater than the hold time of the first hold circuit 44) in output timing between the first collision determination signal output from the collision determination circuit 46 and the second collision determination signal, when the second collision determination signal at a high level is output to the second AND circuit 49, a first ignition signal, which is held at a high level by the second hold circuit 48, is input to the second AND circuit 49. Therefore, a second ignition signal at a high level is output from the second AND circuit 49, and as a result, it is possible to perform the second stage of air bag deployment reliably.

The present invention is not limited to the above-described embodiment, and the following modified examples can be considered.
(1) In the above-described embodiment, a driver's seat air bag 50 and a front passenger's seat air bag 60 are described as examples of an occupant protection device. However, the two stage control occupant protection device is not limited to this. For example, the construction may be such that other occupant protection devices, such as seat belt pretensioners, side air bags, curtain air bags, and the like, are controlled. In this case, the arrangement may be such that side impact sensors (SIS) for detecting side collisions are installed on both sides of the vehicle 10, for example, a side collision is detected based on acceleration data obtained from the SIS, and the side air bag or the like is controlled in two stages.
(2) In the above-described embodiment, two stage deployment control is described as an example of multi-stage deployment control of an occupant protection device. However, the present invention can also be used for multi-stage control of three stages or more. That is, in the case of second or subsequent stages, the construction may be such that given a condition where the collision determination result corresponding to the related stage in the collision determination circuit 46 is a result indicating that there is a collision, and the occupant protection device corresponding to the stage prior to the related stage has been controlled to deploy, the related stage of the occupant protection device is controlled to deploy. In this case, the above-mentioned combination of the second AND circuit 49 and the second hold circuit 48 may be provided corresponding to each of the second and subsequent stages.

## Claims

1. An occupant protection control device which controls multiple-stage deployment of a plurality of occupant protection devices when a vehicle collides, the occupant protection control device comprising:
a collision determination device which performs collision determination corresponding to each stage based on an output signal from a first acceleration detection device for detecting an acceleration acting on the vehicle;
a safing determination device which performs sating determination based on an output signal from a second acceleration detection device for detecting an acceleration acting on the vehicle;
a safing determination hold device which holds a safing determination result obtained by the safing determination device; and
a deployment command device which controls deployment of the occupant protection devices based on a collision determination result obtained by the collision determination device and a safing determination result held by the safing hold device, wherein
the safing determination hold device holds the sating determination result for longer than at least from when the safing determination result becomes a result indicating that there is a collision to when a result of a collision determination corresponding to a first stage obtained by the collision determination device becomes a result indicating that there is a collision, and
the deployment command device, in the case where both the collision determination result corresponding to the first stage obtained by the collision determination device, and the safing determination result held by the safing determination hold device indicate that there is a collision, controls the occupant protection device corresponding to the first stage to deploy, and in the case where a collision determination result corresponding to a second or subsequent stage obtained by the collision determination device indicates that there is a collision, and that the occupant protection device corresponding to a stage prior to said second or subsequent stage has been controlled to deploy, controls the occupant protection device corresponding to said second or subsequent to deploy.

2. The occupant protection control device according to claim 1, wherein
deployment of two of the occupant protection devices is controlled in two stages, and
the deployment command device is provided with:
a first AND operation device which performs an AND operation of a collision determination result corresponding to a first stage obtained by the collision determination device and a sating determination result held by the safing determination hold device, and controls the occupant protection device corresponding to the first stage to deploy in the case where both the collision determination result and the safing determination result indicate that there is a collision;
a deployment command holding device, which holds a result whether or not the occupant protection device corresponding to the first stage is to be controlled to deploy, and in the case where the occupant protection device corresponding to the first stage has been controlled to deploy, holds said result indefinitely; and
a second AND operation device which performs an AND operation of the collision determination result corresponding to a second stage in the collision determination device and the result held by the deployment command holding device, and in the case where the collision determination result corresponding to the second stage indicates that there is a collision, and that the result held by the deployment command holding device indicates that the occupant protection device corresponding to the first stage has been controlled to deploy, controls a second stage of the occupant protection device to deploy.

3. An occupant protection system, comprising:
a plurality of occupant protection devices installed in order to protect an occupant of a vehicle when a collision occurs;
a first acceleration detection device for detecting an acceleration acting on the vehicle;
a second acceleration detection device for detecting an acceleration acting on the vehicle, the second acceleration detection device being installed in a different location from the first acceleration detection device; and
an occupant protection control device according to either one of claim 1 and claim 2.

## Patentansprüche

1. Insassenschutz-Steuervorrichtung, die einen mehrstufigen Einsatz mehrerer Insassenschutzvorrichtungen steuert, wenn ein Fahrzeug kollidiert, wobei die Insassenschutz-Steuervorrichtung enthält.
eine Kollisionsbestimmungsvorrichtung, die eine Kollisionsbestimmung entsprechend jeder Stufe auf der Grundlage eines Ausgangssignals von einer ersten Beschleunigungserfassungsvorrichtung zum Erfassen einer auf das Fahrzeug wirkenden Beschleunigung durchführt;
eine Rettungsbestimmungsvorrichtung, die eine Rettungsbestimmung auf der Grundlage eines Ausgangssignals von einer zweiten Beschleunigungserfassungsvorrichtung zum Erfassen einer auf das Fahrzeug wirkenden Beschleunigung durchführt;
eine Rettungsbestimmungshaltevorrichtung, die ein Rettungsbestimmungsergebnis, das von der Rettungsbestimmungsvorrichtung erhalten wird, hält;
und
eine Einsatzbefehlsvorrichtung, die den Einsatz der Insassenschutzvorrichtungen auf der Grundlage eines von der Kollisionsbestimmungsvorrichtung erhaltenen Kollisionsbestimmungsergebnisses und eines von der Rettungshaltevorrichtung gehaltenen Rettungsbestimmungsergebnisses steuert, wobei
die Rettungsbestimmungshaltevorrichtung das Rettungsbestimmungsergebnis länger hält als wenigstens ab dann, wenn das Rettungsbestimmungsergebnis ein Ergebnis wird, das anzeigt, dass eine Kollision vorliegt, bis dann, wenn ein Ergebnis einer Kollisionsbestimmung, die einer ersten Stufen entspricht, die von der Kollisionsbestimmungsvorrichtung erhalten wird, ein Ergebnis wird, dass anzeigt, dass eine Kollision vorliegt, und
die Einsatzbefehlsvorrichtung in dem Fall, in dem sowohl das Kollisionsbestimmungsergebnis, das der von der Kollisionsbestimmungsvorrichtung erhaltenen ersten Stufe entspricht, als auch das Rettungsbestimmungsergebnis, das von der Rettungsbestimmungshaltevorrichtung gehalten wird, anzeigen, dass eine Kollision vorliegt, die der ersten Stufe entsprechende Insassenschutzvorrichtung zum Einsatz bringt, und in dem Fall, in dem ein Kollisionsbestimmungsergebnis, das einer zweiten oder nachfolgenden Stufe entspricht, die von der Kollisionsbestimmungsvorrichtung erhalten wird, anzeigt, dass eine Kollision vorliegt, und dass die einer Stufe vor der zweiten oder nachfolgenden Stufe entsprechende Insassenschutzvorrichtung zum Einsatz gebracht worden ist, die der zweiten oder nachfolgenden Stufe entsprechende Insassenschutzvorrichtung zum Einsatz bringt.

2. Insassenschutz-Steuervorrichtung nach Anspruch 1, wobei
ein Einsatz von zwei der Insassenschutzvorrichtungen in zwei Stufen gesteuert wird, und
die Einsatzbefehlsvorrichtung versehen ist mit:
einer ersten UND-Operationsvorrichtung, die eine UND-Operation eines Kollisionsbestimmungsergebnisses, das einer von der Kollisionsbestimmungsvorrichtung erhaltenen ersten Stufe entspricht, und eines Rettungsbestimmungsergebnisses, das von der Rettungsbestimmungshaltevorrichtung gehalten wird, durchführt, und die Insassenschutzvorrichtung, die der ersten Stufe entspricht, in dem Fall zum Einsatz bringt, in dem sowohl das Kollisionsbestimmungsergebnis als auch das Rettungsbestimmungsergebnis anzeigen, dass eine Kollision vorliegt;
eine Einsatzbefehlshaltevorrichtung, die ein Ergebnis, ob die der ersten Stufe entsprechende Insassenschutzvorrichtung zum Einsatz zu bringen ist, oder nicht, hält, und in dem Fall, in dem die der ersten Stufe entsprechende Insassenschutzvorrichtung zum Einsatz gebracht worden ist, das Ergebnis auf unbestimmte Zeit hält;
und
eine zweite UND-Operationsvorrichtung, die eine UND-Operation des Kollisionsbestimmungsergebnisses, das einer zweiten Stufe in der Kollisionsbestimmungsvorrichtung entspricht, und des von der Einsatzbefehlshaltevorrichtung gehaltenen Ergebnisses durchführt, und in dem Fall, in dem das Kollisionsbestimmungsergebnis, das der zweiten Stufe entspricht, anzeigt, dass eine Kollision vorliegt, und in dem das von der Einsatzbefehlshaltevorrichtung gehaltene Ergebnis anzeigt, das die der ersten Stufe entsprechende Insassenschutzvorrichtung zum Einsatz gebracht worden ist, eine zweite Stufe der Insassenschutzvorrichtung zum Einsatz bringt.

3. Insassenschutzsystem, enthaltend:
mehrere Insassenschutzvorrichtungen, die installiert sind, um einen Insassen eines Fahrzeuges zu schützen, wenn eine Kollision stattfindet;
eine erste Beschleunigungserfassungsvorrichtung zum Erfassen einer auf das Fahrzeug wirkenden Beschleunigung;
eine zweite Beschleunigungserfassungsvorrichtung zum Erfassen einer auf das Fahrzeug wirkenden Beschleunigung, wobei die zweite Beschleunigungserfassungsvorrichtung an einem von der ersten Beschleunigungserfassungsvorrichtung verschiedenen Ort installiert ist; und
eine Insassenschutz-Steuervorrichtung nach einem der Ansprüche 1 und 2.

## Revendications

1. Dispositif de commande de la protection d'un occupant, qui commande un déploiement à étages multiples d'une pluralité de dispositifs de protection d'un occupant, lorsqu'un véhicule entre en collision, le dispositif de commande de la protection d'un occupant, comprenant :
un dispositif de détermination d'une collision, qui effectue une détermination d'une collision correspondant à chaque étage, sur la base d'un signal de sortie d'un premier dispositif de détection d'une accélération, pour détecter une accélération agissant sur le véhicule ;
un dispositif de détermination de la sûreté, qui effectue une détermination de la sûreté, sur la base d'un signal de sortie d'un deuxième dispositif de détection d'accélération, pour détecter une accélération agissant sur le véhicule ;
un dispositif de maintien de la détermination de la sûreté, qui maintient un résultat de détermination de la sûreté obtenu par le dispositif de détermination de la sûreté ; et
un dispositif d'instruction de déploiement, qui commande le déploiement des dispositifs de protection d'un occupant, sur la base d'un résultat de détermination d'une collision obtenu par le dispositif de détermination d'une collision et d'un résultat de détermination de la sûreté maintenu par le dispositif de maintien de la sûreté,
dans lequel
le dispositif de maintien de détermination de la sûreté maintient le résultat de détermination de la sûreté plus longtemps qu'au moins de l'instant où le résultat de détermination de la sûreté devient le résultat indiquant qu'il y a une collision, à l'instant où un résultat d'une détermination d'une collision correspondant à un premier étage obtenu par le dispositif de détermination d'une collision devient un résultat indiquant qu'il y a une collision, et
le dispositif d'instruction de déploiement, dans le cas où à la fois le résultat de détermination d'une collision correspond au premier étage obtenu par le dispositif de détermination d'une collision et le résultat de détermination de la sûreté maintenu par le dispositif de maintien d'une détermination de la sûreté indiquent qu'il y a une collision, commande au dispositif de protection d'un occupant correspondant au premier étage de se déployer et, dans le cas où un résultat de détermination d'une collision correspondant à un deuxième étage ou à un étage suivant obtenu par le dispositif de détermination d'une collision indique qu'il y a une collision, et en ce que le dispositif de protection d'un occupant correspondant à un étage avant que le deuxième étage ou un étage suivant a été commandé pour se déployer, commande au dispositif de protection d'un occupant correspondant au deuxième ou à l'étage suivant de se déployer.

2. Dispositif de commande de la protection d'un occupant suivant la revendication 1, dans lequel
le déploiement de deux des dispositifs de protection d'un occupant est commandé en deux étages, et
le dispositif d'instruction de déploiement est pourvu de :
un premier dispositif de fonctionnement ET, qui effectue une opération ET d'un résultat de détermination d'une collision correspondant à un premier étage obtenu par le dispositif de détermination d'une collision et un résultat de détermination de la sûreté maintenu par le dispositif de maintien de la détermination de la sûreté et commande au dispositif de protection d'un occupant correspondant au premier étage de se déployer, dans le cas où à la fois le résultat de détermination d'une collision et le résultat de détermination de la sûreté indiquent qu'il y a une collision ;
un dispositif de maintien d'une instruction de déploiement, qui maintient un résultat sur le point de savoir si ou non le dispositif de protection d'un occupant correspondant au premier étage doit être commandé pour se déployer et, dans le cas où le dispositif de protection d'un occupant correspondant au premier étage a été commandé pour se déployer, maintient ce résultat indéfiniment ; et
un deuxième dispositif de fonctionnement ET, qui effectue une opération ET du résultat de détermination d'une collision correspondant à un deuxième étage dans le dispositif de détermination d'une collision et le résultat maintenu par le dispositif de maintien d'une instruction de déploiement et, dans le cas où le résultat de détermination d'une collision correspondant au deuxième étage indique qu'il y a une collision et que le résultat maintenu par le dispositif de maintien d'une instruction de déploiement indique que le dispositif de protection d'un occupant correspondant au premier étage a été commandé pour se déployer, commande à un deuxième étage du dispositif de protection d'un occupant de se déployer.

3. Système de protection d'un occupant, comprenant :
une pluralité de dispositifs de protection d'un occupant montés afin de protéger un occupant d'un véhicule, lorsqu'une collision se produit ;
un premier dispositif de détection d'une accélération, pour détecter une accélération agissant sur le véhicule ;
un deuxième dispositif de détection d'une accélération, pour détecter une accélération agissant sur le véhicule, le deuxième dispositif de détection d'une accélération étant monté en un emplacement différent de celui du premier dispositif de détection d'une accélération ; et
un dispositif de commande de la protection d'un occupant suivant l'une ou l'autre des revendications 1 et 2.
